# EUROPÄISCHE PATENTSCHRIFT

(11) **EP 0 418 502 B1**
(45) Veröffentlichungstag und Bekanntmachung des Hinweises auf die Patenterteilung: **30.03.1994**
(21) Anmeldenummer: 90114069.9
(22) Anmeldetag: 23.07.1990
(51) Int. Cl.: F16K 31/06, B60T 8/36

(54) **Magnetventil**
Electromagnetic valve
Clapet électromagnétique

(30) Priorität: 22.09.1989 DE 3931742
(43) Veröffentlichungstag der Anmeldung: 27.03.1991
(73) Patentinhaber: KNORR-BREMSE AG, 80710 München (DE)
(72) Erfinder: Theiss, Armin, D-8150 Holzkirchen (DE); Vollmer, Otto, D-8000 München 21 (DE)

(56) Entgegenhaltungen:
- EP-A- 0 190 882
- DE-A- 3 631 811
- US-A- 4 579 146

## Beschreibung

Die Erfindung betrifft ein Magnetventil nach dem Gattungsbegriff des Patentanspruches, wie es aus dem Stand der Technik allgemein bekannt ist.

Magnetventile, welche als elektro-pneumatische Steuer- und Regelventile einsetzbar sind, z.B. in elektronisch beeinflußten Bremssystemen von Fahrzeugen, weisen einen konstanten Querschnitt (Nennweite) auf, über welchem das Belüften eines Steuer- oder Verbrauchervolumens durchgeführt wird. Für das Zeitverhalten derartiger Magnetventile, d.h. für das schnelle Belüften (Großsignal), bietet sich die Verwendung einer entsprechend großen Nennweite an; dies hat zur Folge, daß kleine Druckstufen nur noch durch äußerst kleine Schaltzeiten erzielbar sind. Das Problem bei derartigen Magnetventilen besteht demnach darin, daß nur eine bestimmte Nennweite zur Verfügung steht und bestimmte Schaltzeiten technisch nicht unterschritten werden können. Magnetventile mit der Fähigkeit schneller Belüftung von Steuer- oder Verbrauchervolumen sind folglich nur unzureichend geeignet, kleine Druckstufen (Kleinsignal) zu erzeugen bzw. für eine gute Auflosung und Dosierbarkeit im Druckverhalten zu sorgen. Legt man die Nennweite des Magnetventils so aus, daß gerade noch ein zufriedenstellendes Zeitverhalten gewährleistet ist (Großsignal), dann wird die erreichbare Auflösung durch die kleinstmögliche Schaltzeit des Magneten bestimmt. Die Anforderungen, wie sie z.B. an einen E/P-Wandler für elektronisch beeinflußte Bremssysteme gestellt werden, sind mit einem konstanten Querschnitt (Nennweite) jedoch nicht zufriedenstellend zu erfüllen:
Bekannt ist eine zur Steuerung eines Öldruckes dienende Solenoidventil-Anordnung (DE-A-3 631 811), bei welcher innerhalb eines gemeinsamen Gehäuses in Hintereinanderanordnung zwei einzelne Solenoidventile zur Anwendung gelangen. Mit derartigen Ventilkonstruktionen soll jeweils einer von vier Zuständen ermöglicht werden, d.h. ein schneller Reduktionszustand mit einer hohen Durchflußrate und einem verringerten Druck, ein langsamer Druckreduktionszustand mit einer geringen Durchflußrate und einem geringen Druck, ein langsamer Verstärkungszustand mit einer geringen Durchflußrate und einem hohen Druck, und ein schneller Verstärkungszustand mit einer hohen Durchflußrate und einen hohen Druck. Für pneumatisch wirkende Steuerventile der in Rede stehenden Art sind derartige Konstruktionen nicht geeignet, auch ist der bauliche Aufwand beträchtlich. Im weiteren sind mit drei Öffnungen versehene, zur Durchfluß- und Drucksteuerung hydraulischen Mediums dienende Solenoidventil-Anordnungen bekannt (US-A-4,579,146), bei welchen durch konstruktive Mittel Vorsorge gegen Federbruch geschaffen ist. Auch derartige Ventile sind zur Anwendung als pneumatische Steuer- und Regelventile mit Klein- und Großsignal nicht geeignet.

Davon ausgehend besteht die Aufgabe der Erfindung darin, ein Magnetventil zu schaffen, welches bei baulich einfacher Auslegung sowohl Großsignal- als auch Kleinsignalverhalten besitzt und insofern z.B. für elektronisch beeinflußte Bremssysteme verwendbar ist.

Zur Lösung dieser Aufgabe dienen die Merkmale nach dem Kennzeichnungsteil des Patentanspruches.

Bei dem Magnetventil nach der Erfindung wird der Nachteil größeren Bauaufwands, größeren Bauvolumens und der bisher erforderlichen Ansteuerung eines zusätzlichen Magnetventils dadurch beseitigt, daß die zwei ineinander angeordneten Anker wahlweise durch Erregen nur einer Spule mit unterschiedlich hoher Stromstärke unabhängig voneinander angezogen werden; vorzugsweise gibt der innere Anker bei ca. halber Stromstärke einen kleinen Querschnitt frei (Kleinsignal), während der äußere Anker einen großen Querschnitt (Großsignal) bei ca. voller Stromstärke freigibt. Hierdurch ist die Möglichkeit schneller Belüftung als auch die zusätzliche Möglichkeit der Erzeugung kleiner Druckstufen bei Verwendung eines einzelnen Magnetventils ermöglicht.

Die Erfindung ist nachfolgend anhand von Ausführungsbeispielen unter Bezugnahme auf die beigefügte Zeichnung erläutert.
- Fig.1-3: geben in Teilschnittansicht das erfindungsgemäße Magnetventil in unterschiedlichen Funktionsstellungen wieder; und
- Fig.4: gibt eine Schaltungsanordnung unter Verwendung zweier Magnetventile nach der Erfindung wieder, wobei auch das Entlüften in den Funktionsstufen Großsignal und Kleinsignal ermöglicht ist.

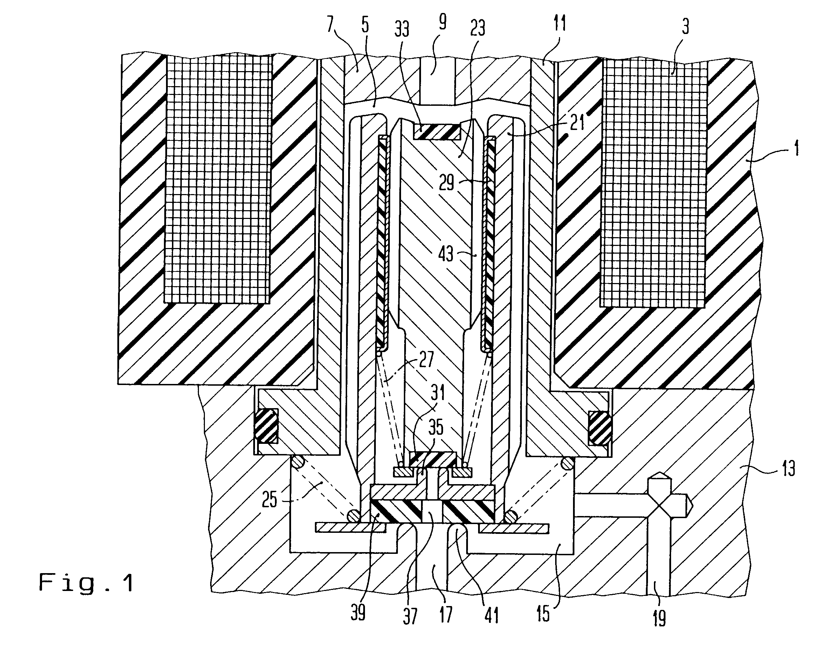

Das in den Figuren 1-3 in verschiedenen Funktionsstellungen dargestellte Magnetventil weist ein Spulengehäuse 1 mit einer darin eingebetteten Spule 3 auf; die Spule 3 ist mittels einer (nicht dargestellten) Verbindung an eine Stromversorgung angeschlossen. Im inneren der Spule 3 befindet sich in bekannter Weise ein zylindrischer Raum 5, innerhalb welchem die nachfolgend beschriebene Ankeranordnung axial hin- und herbewegbar geführt ist. Der Raum 5 ist gemäß Darstellung am oberen Ende durch einen Kern 7 begrenzt, wobei eine Entlüftungsleitung 9 in den Raum 5 mündet. Der zylindrische Raum 5 ist durch ein äußeres Ankerführungsrohr 11 umgeben, welches am unteren Ende gegenüber dem Ventilgehäuse 13 abgedichtet ist. In die in Verlängerung des Raumes 5 befindliche Kammer 15 mündet ein an Vorrat angeschlossener Zufluß 17. Von der Kammer 15 zweigt ein Abfluß 19 ab, welcher zu einem Verbraucher führt.

Die im Inneren des Raumes 5 axial beweglich geführte Ankeranordnung besteht im wesentlichen aus einem äußeren Anker 21 und aus einem inneren Anker 23. Am äußeren Anker 21 und am inneren Anker 23 greifen jeweils Rückstellfedern 25,27 an, wobei die Rückstellfedern jeweils die Ausgangslage des Ankers im nicht betätigten Zustand bestimmen. Der innere Anker 23 ist im Inneren des äußeren Ankers 21 axial beweglich geführt, wobei sich zwischen innerem und äußerem Anker eine magnetfeldisolierende Schicht 29 befindet. Der innere Anker 23 kann mit beliebigen Führungen relativ zum äußeren Anker verschieblich gehaltert sein und weist an seinen Stirnseiten jeweils ein Ventilelement 31 bzw. 33 auf. Das in der Darstellung untere Ventilelement 31 wirkt mit einem Ventilsitz 35 eines am unteren Ende des äußeren Ankers 21 befindlichen Kanals 37 zusammen, wobei der Kanal 37 in einem Ventilelement 39 des äußeren Ankers mündet. Das Ventilelement 39 seinerseits wirkt positionsabhängig mit einem Ventilsitz 41 an der Mündung des an Vorrat angeschlossenen Zuflusses 17 zusammen, wobei in der dargestellten Position die Verbindung zwischen dem Zufluß 17 und dem Abfluß 19 als auch die Verbindung zwischen dem Zufluß 17 und der Entlüftungsleitung 9 gesperrt sind, während zwischen dem Abfluß 19 und der Entlüftungsleitung 9 freie Verbindung im Bereich zwischen der Innenwand des Ankerführungsrohr 11 und dem Außenumfang des äußeren Ankers besteht.

Die Spule 3 des Magnetventils ist unterschiedlich stark erregbar, um die inneren und äußeren Anker in nachfolgend beschriebener Weise zur Wirkung kommen zu lassen, so daß ein schnelles Belüften (Großsignal) eines Steuer- oder Verbrauchervolumens als auch eine kleinstufige Dosierung der Belüftung (Kleinsignal) ermöglicht ist.

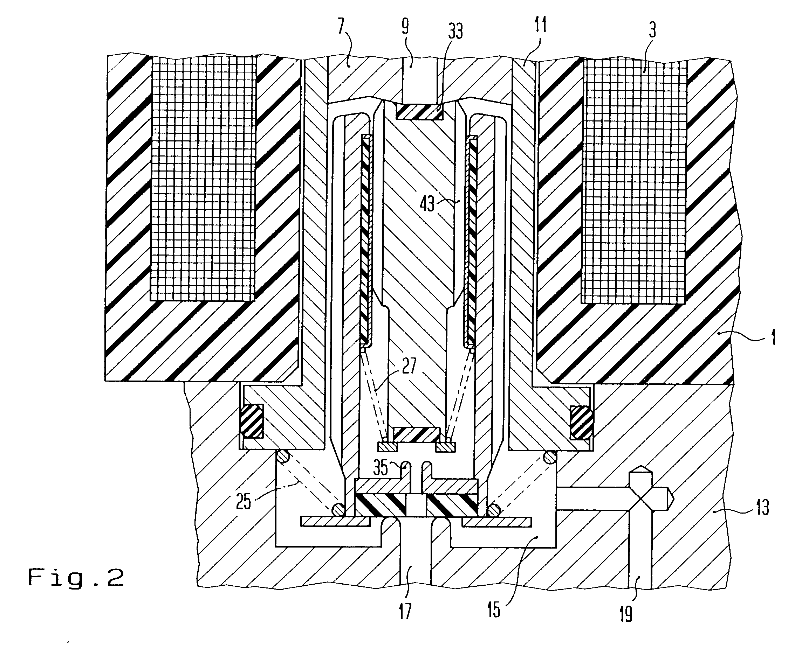

Die Wirkungsweise der vorstehend hinsichtlich der Bauteile beschriebenen Anordnung ist wie folgt :
Wird ausgehend von der Ruhelage des Magnetventils nach Fig.1 die Spule 3 mit ca. halber Stromstärke erregt, dann wird der innere Anker 23 nach oben gezogen und sperrt mittels seines stirnseitig befindlichen Ventilelements 33 die Entlüftungsleitung 9, wie in Fig.2 dargestellt ist. Gleichzeitig hebt der innere Anker gegen die Vorspannung der Rückstellfeder 27 das Ventilelement 31 vom Ventilsitz 35 ab, so daß eine kleinquerschnittige Verbindung zwischen dem an Vorrat angeschlossenen Zufluß 17 und dem Raum 43 zwischen Außenumfang des inneren Ankers und Innenumfang der Schicht 29 und demnach freie Verbindung mit dem Abfluß 19 besteht, da der Bereich an der Oberseite des äußeren Ankers mit dem Zwischenraum zwischen dem äußeren Anker und dem Innenumfang des Ankerführungsrohrs 11 in Verbindung ist. Bei dieser Art der Belüftung des Verbrauchers über den Abfluß 19 ist eine gute "Auflösung" erreichbar, d.h. infolge kleinem Queschnitts gut dosierbare Belüftung bei Erzeugung kleiner Druckstufen (Kleinsignal). Die Dosierung ist durch Veränderung der Schaltzeiten und/oder durch Veränderung der Nennweiten ermöglicht, wobei z.B. der Kanal 37 einen auswechselbaren Einsatz für unterschiedliche Nennweiten enthalten kann.

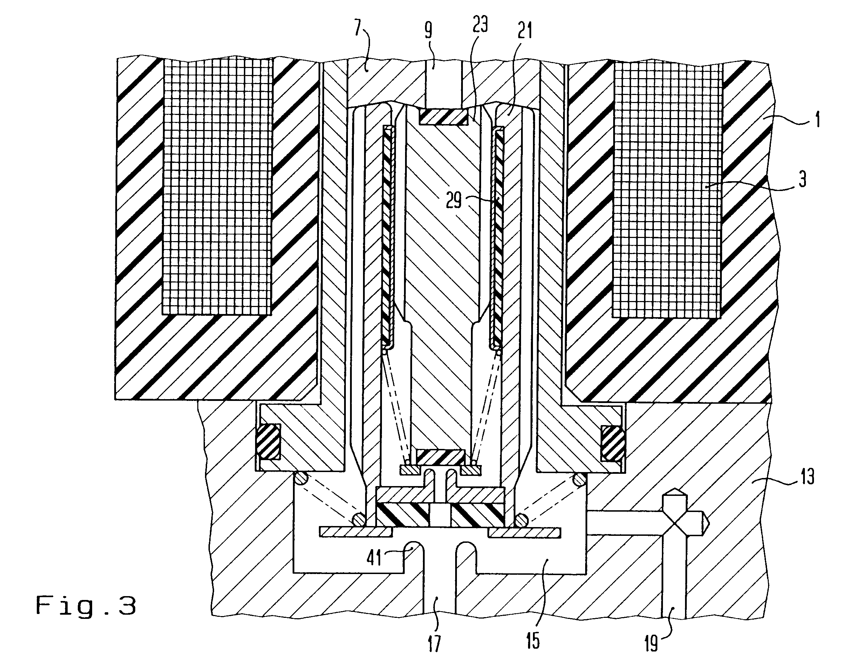

Wird ausgehend von der Position nach Fig.1 volle Stromstärke an die Spule 3 angelegt, dann bewegt sich der äußere Anker 21 nach oben in Anschlagposition am Kern 7 (Fig.3), wobei der innere Anker 23 infolge der wechselseitigen Abstützung über die Rückstellfeder 27 als auch gleichzeitig über die einwirkenden Magnetkräfte nach oben gerichtet mitgenommen wird und sich abdichtend an die Mündung der Entlüftungsleitung 9 anlegt (Fig.3). In dieser Position besteht bei vom Ventilsitz 41 abgehobenem Ventilelement 39 großquerschnittige Verbindung zwischen dem Zufluß 17 und dem Abfluß 19 (Großsignal). Die Entlüftungsleitung 9 ist hierbei in vorstehend erläuterter Weise geschlossen. Die Position nach Fig.3 kann auch durch Nachfahren des äußeren Ankers 21 aus der Position nach Fig.2, d.h. durch Umschalten von halber Stromstärke auf volle Stromstärke erreicht werden, wobei neben der Auslegung des elektromagnetischen Systems des Doppelanker-Magentventils die Abstimmung der Kräfte der Rückstellfedern 25 und 27 maßgebend ist.

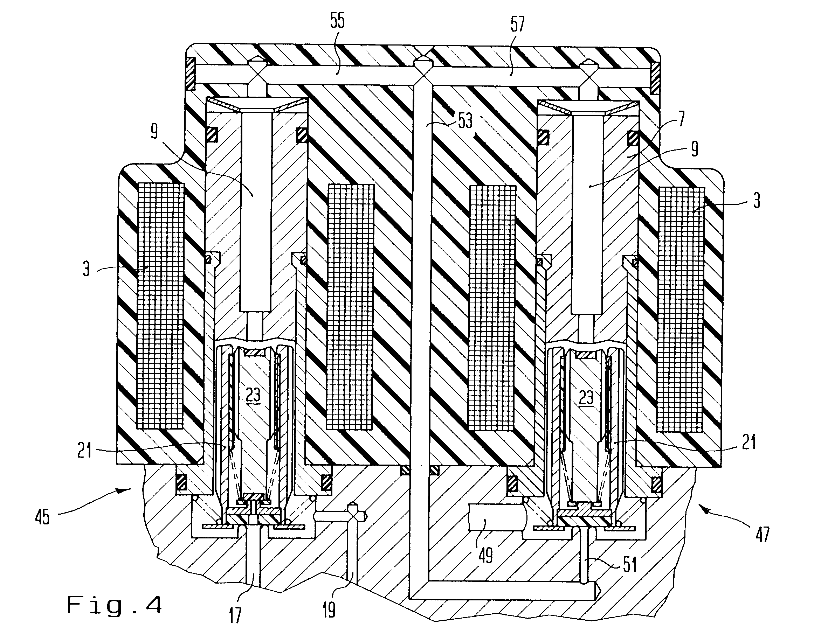

Bei der in Fig.4 dargestellten Ausführungsform sind zwei erfindungsgemäße Magnetventile 45 und 47 in funktioneller Verbindung miteinander vorgesehen. Mit Hilfe der beiden Magnetventile ist es möglich, in den Funktionsarten Großsignal und Kleinsignal sowohl das Belüften und Entlüften vorzunehmen. Des weiteren ist in einer der Positionen das Druckhalten möglich.

Die Magnetventile 45 und 47 entsprechen in ihrem inneren Aufbau im wesentlichen dem vorstehend erläuterten Magnetventil nach der Erfindung, wobei beim Magnetventil 47 das Ventilelement 39 ohne Kanal 37 ausgebildet und anstelle des Ventilsitzes 35 ein Anschlag vorgesehen ist. Die Zuleitungen und Ableitungen des Magnetventils 45 entsprechen in gleicher Weise der Anordnung des vorstehend erläuterten Magnetventils. Beim rechtsseitig wiedergegebenen Magentventil 47 ist ein Entlüftungsabfluß 49 vorgesehen, welcher in nachstehend erläuterter Weise mit einem Kanalabschnitt 51 kleinen Querschnitts Verbindbar ist. Der Kanalabschnitt 51 steht über einen Kanal 53 und Abzweigungen 55 und 57 jeweils mit der Entlüftungsleitung 9 des Magnetventils 45 bzw. der Entlüftungsleitung 9 des Magnetventils 47 in Verbindung. Mit Hilfe der dargestellten Anordnung ist es möglich, das Belüften und Entlüften jeweils in der Funktion Großsignal und Kleinsignal vorzunehmen, wobei jeweils nur eine der Spulen der beiden Magentventile erregt zu werden braucht. Die Funktionsweise der Ventilanordnung ist wie folgt :
Sind die Spulen der beiden Magnetventile 45 und 47 stromlos, dann befinden sich die beiden Magentventile in der in Fig.4 dargestellten Relativlage bezüglich der Zu- und Ableitungen. Demgemäß ist der Verbraucher über den Abfluß 19 und über die Verbindung am Außenumfang des äußeren Ankers 21 mit der Entlüftungsleitung 9 in Verbindung, wobei die Entlüftungsleitung 9 über die Abzweigung 55, die Abzweigung 57, die Entlüftungsleitung 9 des Magnetventils 47 und über die offene Verbindung am Außenumfang des äußeren Ankers 21 an den Entlüftungsabfluß 49 angeschlossen ist. Es handelt sich hierbei um eine großquerschnittige Entlüftung des Verbrauchers (Großsignal).

Ist das Magnetventil 47 bzw. dessen Spule mit voller Stromstärke erregt, während die Spule des Magnetventils 45 stromlos bleibt, dann wird die Ankerordnung des Magnetventils 47 insgesamt angehoben, d.h., daß die Entlüftungsleitung 9 verschlossen und der Kanalabschnitt 51 kleinen Querschnitts gegenüber dem Entlüftungsabfluß 49 geöffnet wird. Der Verbraucher steht nunmehr über den Abfluß 19, die Ausnehmung 5, die Entlüftungsleitung 9, die Abzweigung 55, den Kanal 53 und den Kanalabschnitt 51 kleinen Querschnitts mit dem Entlüftungsabfluß 49 in Verbindung. Es handelt sich somit um eine Entlüftung mit der Funktion Kleinsignal.

In der dritten Schaltposition ist das Magnetventil 45 erregt, und zwar mit voller Stromstärke, während das Magnetventil 47 nicht erregt ist. Dies bedeutet, daß das Magnetventil 47 die in Fig.4 der Zeichnung wiedergegebene Lage einnimmt, während das Magentventil 45 die in Fig.3 der Zeichnung dargestellte Position einnimmt. In dieser Lage ist die Entlüftungsleitung 9 durch den inneren Anker 23 gesperrt, während zwischen dem an Vorrat angeschlossenen Zufluß 17 und dem mit dem Verbraucher in Verbindung stehenden Abfluß 19 freie, großquerschnittige Verbindung existiert. Es handelt sich um eine Belüftung mit der Funktion Großsignal.

In der vierten Funktionsstellung ist wiederum das Magnetventil 47 ohne Erregung und nimmt die in Fig.4 der Zeichnung dargestellte Lage ein, während das Magnetventil 45 mit halber Stromstärke erregt wird. Dadurch nehmen die Teile des Magnetventils 45 die in Fig.2 der Zeichnung wiedergegebene Relativlage zueinander ein, d.h., daß die Entlüftungsleitung 9 gesperrt ist, während gleichzeitig die großquerschnittige Verbindung zwischen dem Zufluß 17 und dem Abfluß 19 gesperrt bleibt. Da sich der innere Anker vom Ventilsitz 35 abgehoben hat, besteht indessen eine kleinquerschnittige Verbindung zwischen dem Zufluß 17, dem Raum 43 zwischen dem inneren Anker und dem äußeren Anker, dem Raum außerhalb des äußeren Ankers und dem an den Verbraucher angeschlossenen Abfluß 19. Hierbei handelt es sich um eine Belüftung mit der Funktion Kleinsignal, also mit kleinem Querschnitt und dementsprechend kleinem Volumen von guter Dosierbarkeit.

Die fünfte Funktionsstellung der beiden Magnetventile entspricht der Position Druckhalten. Hierbei ist das Magnetventil 45 stromlos, während das Magnetventil 47 mit halber Stromstärke erregt ist. Nunmehr nimmt das Magnetventil 47 eine Position ein, in welcher die Entlüftungsleitung 9 durch den inneren Anker gesperrt ist und die Sperre zwischen dem Kanalabschnitt 51 und dem Entlüftungsabfluß 49 aufrechterhalten bleibt. Nachdem beim Magnetventil 45 die Verbindung zwischen dem Zufluß und dem Abfluß 19 gleichfalls unterbunden ist, kann kein Druckaufbau oder Druckabbau stattfinden, der Druck wird also gehalten.

Die vorstehenden Funktionsbeschreibungen verdeutlichen, daß von den beiden Magnetventilen bzw. deren Spuren jeweils nur eine mit Strom gespeist ist, diese entweder mit halber oder mit voller Stromstärke. eine gleichzeitige Magneterregung beider Magnetventile ist nicht erforderlich.

## Patentansprüche

1. Magnetventil zur Verwendung als elektro-pneumatisches Steuer- und Regelventil, mit Wenigstens drei vom Magnetventil überwachten Anschlüssen, bestehend aus Zufluß (17), Abfluß (19) und Entlüftung (Entlüftungsleitung 9), von welchen der Zufluß (17) und die Entlüftung (Entlüftungsleitung 9) koaxial mit Abstand innerhalb eines von einer Spule (3) umgebenen zylindrischen Raumes (5) einander gegenüberliegen, und mit einer zwischen diesen zwei Anschlüssen befindlichen Ankeranordnung, welche durch Magnetkräfte entgegen Federkraft axial verschieblich ist, wobei die Stirnflächen der Ankeranordnung mit den Mündungen der zwei Anschlüsse (Zufluß und Entlüftung) wechselweise betätigbare Ventile bilden, um den Zufluß (17) mit dem Abfluß (19) bei gesperrter Entlüftung bzw. den Abfluß (19) mit der Entlüftung bei gesperrtem Zufluß (17) zu verbinden, gekennzeichnet durch folgende Merkmale:
a) die Ankeranordnung besteht aus einem in den zylindrischen Raum (5) axial beweglich geführten äußeren Anker (21) und aus einen in diesem gleichfalls axial beweglich geführten inneren Anker (23);
b) der äußere Anker (21) ist hohl ausgebildet und an seinem der Entlüftung (Entlüftungsleitung 9) zugewandten Ende offen, wobei der innere Anker (23) bei Erregung der Spule (3) mit geringer Stromstärke gegen Federkraft durch das offene Ende des äußeren Ankers (23) hindurch bewegbar ist und mit seiner Stirnfläche (Ventilelement 33) in Verschlußlage gegenüber der Entlüftung (Entlüftungsleitung 9) wirkt;
c) das entgegengesetzte Ende des äußeren Ankers (21) weist einen axial verlaufenden Kanal (37) auf, dessen Durchmesser kleiner ist als der Durchmesser des inneren Ankers (23), derart, daß der Kanal (37) bei nicht erregter Spule (3) innenseitig durch die zugewandte Stirnfläche (Ventilelement 31) des unter Federkraft wirkenden inneren Ankers (23) schließbar ist;
d) die von der Mündung des Kanals (37) durchsetzte Stirnfläche (Ventilelement 39) des äußeren Ankers (21) ist unter Einwirkung von Federkraft am äußeren Anker (21) an die Mündung des Zuflusses (17) in Verschlußlage anlegbar, so daß bei geschlossenem Kanal (37) die Verbindung zwischen dem Zufluß (17) und dem Abfluß (19) gesperrt ist;
e) der äußere Anker (21) ist zusammen mit dem inneren Anker (23) oder bei in Verschlußlage gegenüber der Entlüftung befindlichem inneren Anker unabhängig von diesem bei Erregung der Spule (3) mit großer Stromstärke gegen Federkraft in seine Offenlage bewegbar, in welcher zwischen dem Zufluß (17) und dem Abfluß (19) eine großquerschnittige Verbindung besteht;
f) der Bereich zwischen dem Innenumfang des äußeren Ankers (21) und dem Außenumfang des inneren Ankers (23) steht ständig in freier Verbindung mit dem Abfluß (19), derart, daß bei Erregung der Spule (3) mit geringer Stromstärke und Sperrung der Entlüftung (Entlüftungsleitung 9) durch den inneren Anker (23) bei gleichzeitiger Sperrung des Zuflusses (17) durch den äußeren Anker (21) und geöffneten Kanal (37) kleinquerschnittige Verbindung zwischen dem Zufluß (17), dem Bereich zwischen dem inneren Anker (23) und dem äußeren Anker (21) und den Abfluß (19) besteht.

## Claims

1. Electromagnetic valve for use as an electropneumatic control and regulation valve, having at least three terminals monitored by the electromagnetic valve, comprising inflow (17), discharge (19) and ventilation (ventilation line 9), of which the inflow (17) and the ventilation (ventilation line 9) are spaced apart coaxially opposite each other within a cylindrical chamber (5) surrounded by a coil (3), and having an armature arrangement located between these two terminals which is axially movable by magnetic forces against spring force, the front ends of the armature arrangement forming alternately actuatable valves with the openings of the two terminals (inflow and ventilation), in order to join the inflow (17) to the discharge (19) when the ventilation is blocked, or to join the discharge (19) to the ventilation when the inflow (17) is blocked, characterised by the following features:
a) the armature arrangement comprises an outer armature (21) guided axially movably in the cylindrical chamber (5), and an inner armature (23) also guided axially movably in it;
b) the outer armature (21) is of hollow construction and is open at its end facing the ventilation (ventilation line 9), the inner armature (23) being movable against spring force through the open end of the outer armature (23) upon excitation of the coil with a slight current, and acting with its front end (valve element 33) in the closure position with respect to the ventilation (ventilation line 9);
c) the opposite end of the outer armature (21) has an axially extending duct (37) whose diameter is smaller than the diameter of the inner armature (23), so that when the coil (3) is not excited the duct (37) can be closed on the inside by the facing front end (valve element 31) of the inner armature (23) acting under spring force;
d) the front end (valve element 39) of the outer armature (21), penetrated by the aperture of the duct (37), can be applied to the aperture of the inflow (17) in the closure position, under the effect of spring force on the outer armature (21) so that with the duct (37) closed the connection between the inflow (17) and the discharge (19) is blocked;
e) the outer armature (21) can be moved, together with the inner armature (23) or, when the inner armature is in the closure position with respect to the ventilation, independently of it, when the coil (3) is excited by a large current against spring force, into its open position in which there is a large-section connection between the inflow (17) and the discharge (19);
f) the region between the inner circumference of the outer armature (21) and the outer circumference of the inner armature (23) is constantly in free connection with the discharge (19) so that, when the coil (3) is excited by a small current and blocking of the ventilation (ventilation line 9) by the inner armature (23) with simultaneous blocking of the inflow (17) by the outer armature (21) and an open duct (37), a connection of small cross-section is produced between the inflow (17), the region between the inner armature (23) and the outer armature (21) and the discharge (19).

## Revendications

1. Electrovanne destinée à être utilisée comme vanne électropneumatique de commande et de réglage, comprenant au moins trois raccords surveillés par l'électrovanne et constituée d'une entrée (17), d'une sortie (19) et d'une évacuation (conduit d'évacuation 9), parmi lesquels l'entrée (17) et l'évacuation (conduit d'évacuation 9) sont opposés coaxialement l'un l'autre à distance à l'intérieur d'une chambre (5) cylindrique entourée d'une bobine (3), et comprenant un dispositif à armatures qui se trouve entre ces deux raccords et qui peut coulisser axialement sous l'effet de forces magnétiques à l'encontre de la force d'un ressort, les faces frontales du dispositif à armature formant avec les embouchures des deux raccords (entrée et évacuation) des vannes pouvant être manoeuvrées alternativement pour mettre en communication l'entrée (17) avec la sortie (19) lorsque l'évacuation est fermée ou la sortie (19) avec l'évacuation lorsque l'entrée (17) est fermée remarquable par les caractéristiques suivantes :
a) le dispositif à armatures est constitué d'une armature (21) extérieure guidée de manière à être mobile axialement dans la chambre (5) cylindrique et d'une armature (23) intérieure guidée de manière à être mobile axialement de la même façon dans l'armature extérieure (21) ;
b) l'armature (21) extérieure est creuse et est ouverte à son extrémité tournée vers l'évacuation (conduit d'évacuation 9), l'armature (23) intérieure étant susceptible de se déplacer lorsque la bobine (3) est excitée par un courant de faible intensité à l'encontre de la force du ressort dans l'extrémité ouverte de l'armature (23) extérieure et s'appliquant par sa face frontale (élément de vanne 33) en position de fermeture sur l'évacuation (conduit d'évacuation 9) ;
c) l'extrémité opposée de l'armature (21) extérieure comporte un canal (37) axial dont le diamètre est inférieure de la culasse (23) intérieure, de sorte que le canal (37), lorsque la bobine (3) n'est pas excitée, peut être fermé du côté intérieur par la face frontale (élément de vanne 31) de la culasse (23) intérieure agissant sous l'effet d'une force de ressort, qui est tournée vers lui ;
d) la surface frontale (élément de vanne 39) de l'armature (21) extérieure dans laquelle passe l'embouchure du canal (37) peut être appliquée sous l'action de la force du ressort à l'armature (21) extérieure à l'embouchure de l'entrée (17) en position de fermeture, de manière à interrompre lorsque le canal (37) est fermé la liaison entre l'entrée (17) et la sortie (19) ;
e) l'armature (21) extérieure peut être mise en sa position d'ouverture a l'encontre de la force d'un ressort en même temps que l'armature (23) intérieure ou lorsque l'armature intérieure se trouve en position de fermeture par rapport à l'évacuation, indépendamment de l'armature intérieure lorsque la bobine (3) est excitée par un courant de grande intensité, position d'ouverture dans laquelle il existe une liaison de grande section transversale entre l'entrée (17) et la sortie (19) ;
f) la région comprise entre le pourtour intérieur de l'armature (21) extérieure et le pourtour extérieur de l'armature (23) intérieure communique toujours librement avec l'évacuation (19,) de sorte que si la bobine (3) est excitée par un courant de faible intensité et si l'évacuation (conduit d'évacuation 9) est fermée par l'armature (23) intérieure avec fermeture simultanée de l'entrée (17) par l'armature (21) extérieure et ouverture du canal (37), il existe entre l'entrée (17), la partie comprise entre l'armature (23) intérieure et l'armature (21) extérieure et la sortie (19) une communication de section transversale petite.
